(19) Europäisches Patentamt
European Patent Office
Office européen des brevets

(11) Veröffentlichungsnummer: **0 299 142 B1**

(12) # EUROPÄISCHE PATENTSCHRIFT

(45) Veröffentlichungstag der Patentschrift: **26.05.93**

(21) Anmeldenummer: **88105135.3**

(22) Anmeldetag: **30.03.88**

(51) Int. Cl.5: **C08F 216/04**, C08F 218/14, D06M 15/327, D06M 15/347, //C08F299/02,(C08F216/14, 218:04,226:10,220:12), (C08F218/04,216:14,226:10, 220:12)

(54) **Epoxidgruppen aufweisende Copolymerisate, deren Herstellung und Verwendung zur Ausrüstung von Textilfasern oder Faserprodukten.**

(30) Priorität: **15.07.87 DE 3723355**

(43) Veröffentlichungstag der Anmeldung: **18.01.89 Patentblatt 89/03**

(45) Bekanntmachung des Hinweises auf die Patenterteilung: **26.05.93 Patentblatt 93/21**

(84) Benannte Vertragsstaaten: **CH DE FR GB IT LI**

(56) Entgegenhaltungen:
**EP-A- 218 079**
**EP-A- 0 056 627**
**DE-A- 2 643 637**
**US-A- 4 722 978**

(73) Patentinhaber: **Th. Goldschmidt AG**
**Goldschmidtstrasse 100 Postfach 101461**
**W-4300 Essen 1(DE)**

(72) Erfinder: **Esselborn, Eberhard**
**Pilotystrasse 21**
**W-4300 Essen 1(DE)**
Erfinder: **Fock, Jürgen, Dr.**
**Mörsenbroicherweg 114**
**W-4000 Düsseldorf 30(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft neue Epoxidgruppen aufweisende Copolymerisate, deren Herstellung und Verwendung zur Ausrüstung von Textilfasern oder Faserprodukten. Die Erfindung betrifft insbesondere zur permanenten hydrophilierenden Ausrüstung von Textilfasern oder Faserprodukten geeignete Copolymerisate.

Es ist bekannt, auf die Oberflächen von Fasern oder Faserprodukten Polymerisate aufzubringen, um die Eigenschaften der Fasern oder Faserprodukte in gewünschter Weise zu ändern. Dabei sollen die Fasern insbesondere hydrophiliert werden, um den Tragekomfort der aus ihnen hergestellten Bekleidungsstücke zu erhöhen. Es sollen ferner die Anschmutzung der Textilien, ihre elektrostatische Aufladung und weitere Gebrauchseigenschaften verbessert werden.

Aus der DE-PS 26 43 637 ist ein Verfahren zur Kunstharzausrüstung von Cellulosefasern enthaltenden Faserprodukten bekannt, bei dem man die betreffenden Faserprodukte mit einer Lösung oder Dispersion, die ein glycidylhaltiges Mischpolymerisat enthält, behandelt, trocknet und dann in Gegenwart eines Säurekatalysators bei einer zur Spaltung der Oxiranbindung des Glycidylrestes ausreichenden Temperatur hitzebehandelt, wobei der Katalysator der Lösung oder Dispersion des Mischpolymerisats einverleibt ist oder vor oder nach dem Trocknen in Form einer getrennten Lösung oder Dispersion appliziert wird. Das Verfahren ist dadurch gekennzeichnet, daß man ein Mischpolymerisat verwendet, das besteht aus:

a) 1 bis 55 Mol-% mindestens einer Struktureinheit der Formel:

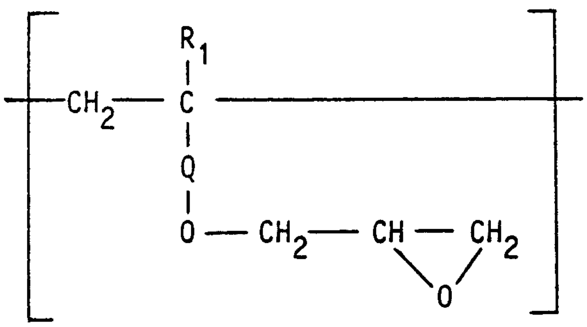

worin bedeuten:

- $R_1$ ein Wasserstoffatom oder einen Methylrest und
- Q CO oder $CH_2$,

b) 0,5 bis 25 Mol-% mindestens einer Struktureinheit der Formel:

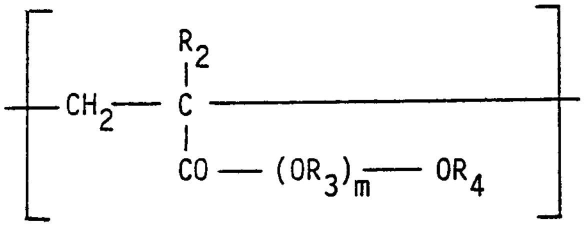

worin bedeuten:

- $R_2$ ein Wasserstoffatom oder einen Methylrest;
- $R_3$ einen gerad- oder verzweigtkettigen Alkylenrest mit nicht mehr als 3 C-Atomen;
- $R_4$ ein Wasserstoffatom, einen gerad- oder verzweigtkettigen Alkylrest, einen Acryloylrest oder einen Methacryloylrest und
- m eine ganze Zahl von 5 bis 25

und

c) 98,5 bis 20 Mol-% mindestens einer Struktureinheit der Formel:

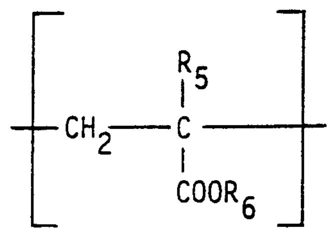

worin bedeuten:

$R_5$ ein Wasserstoffatom oder einen Methylrest und

$R_6$ einen gerad- oder verzweigtkettigen Alkylrest oder einen Hydroxyalkylrest,

sowie ggf.

d) bis zu 10 Mol-% sonstiger vinylartiger Struktureinheiten.

In der DE-OS 32 44 011 ist ein in Wasser dispergierbarer Polyester beschrieben, der aus Baugruppen der Formel

-CO-A-CO-G-O-

aufgebaut ist, wobei

A im statistischen Mittel zu 80 bis 100 Mol-% p-Phenylen

und zu 0 bis 20 Mol-% zweiwertige Reste der Formel

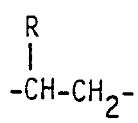

und

G im statistischen Mittel zu
30 bis 90 Mol-% geradlinige oder verzweigte zweiwertige Alkanreste mit 3 bis 6 C-Atomen, die auch durch 1 oder 2 Sauerstoffatome unterbrochen sein können, zu 10 bis 30 Mol-% zweiwertige Polyetherreste mit einem durchschnittlichen Molgewicht von 1000 bis 3000 und zu 0 bis 50 Mol-% Ethylenreste bedeuten und

R für einen geradkettigen oder verzweigten Alkylrest oder Alkenylrest mit 6 bis 18 C-Atomen steht.

Der dispergierbare Polyester soll zur Hydrophilierung, zur Antistatikausrüstung und zur Soil-Release-Ausrüstung von Fasermaterialien, die vollständig oder zu einem erheblichen Anteil aus hydrophoben Fasern bestehen, verwendet werden.

Die bei dem Verfahren der DE-PS 26 43 637 verwendeten Produkte haben jedoch den Nachteil, daß der Griff des mit ihnen behandelten Textilgutes unerwünscht hart ist. Außerdem wird das auf den Fasern befindliche Polymerisat bei Einwirkung von Alkalien verseift, so daß die Permanenz, d.h. die Waschbeständigkeit, es ausgerüsteten Textilgutes ungenügend ist.

Mangelnde Permanenz ist auch ein Nachteil der auf der Grundlage eines dispergierbaren Polyesters gemäß der DE-OS 32 44 011 hergestellten Ausrüstung. Dies rührt daher, daß die Polyester nicht vernetzt sind und deshalb durch Waschen leicht von der Faser abgelöst werden können.

An ein Mittel zur hydrophilierenden Ausrüstung von Fasern oder Faserprodukten werden folgende Anforderungen gestellt:

Der Tragekomfort der Textilien soll erhöht werden, indem die Körperfeuchtigkeit besser durch das Gewebe nach außen abgeführt wird.

Die Ausrüstung soll eine möglichst hohe Permanenz aufweisen und nach einer größeren Anzahl üblicher Waschvorgänge noch hydrophilierend wirken.

Die Anschmutzbarkeit der Textilien soll vermindert werden. Bereits auf den Textilien befindlicher Schmutz soll leichter entfernt werden können.

Die Vergrauung von weißer Haushaltswäsche soll vermindert werden.

Die elektrostatische Aufladung der Textilien soll verringert werden. Hierdurch wird auch die Staubaufnahme minimiert.

Der vorliegenden Erfindung liegt die Aufgabe zugrunde, Produkte zum hydrophilierenden Ausrüsten von Fasern oder Faserprodukten bei gleichzeitig verbesserten Soil-Release-Eigenschaften zu finden, welche diesem Anforderungsprofil entsprechen oder doch zumindest diesem Anforderungsprofil näher als die vergleichbaren Produkte des Standes der Technik kommen. Erwünscht ist auch die Permanenz der Ausrüstung, um die erzielten Effekte auch nach wiederholtem Waschen und gegebenenfalls chemischer Reinigung dauerhaft zu erzielen.

Überraschenderweise wurde gefunden, daß diese Eigenschaftskombination bei neuen Copolymerisaten zu finden ist, die erhältlich sind durch Copolymerisation von

$a_{1)}$ einem Mol eines Makromonomeren der allgemeinen Formel

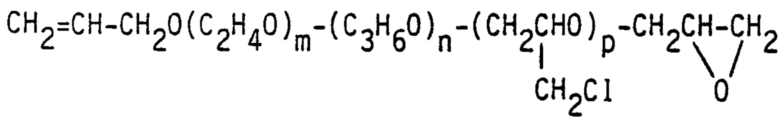

m = 5 bis 75, n = 0 bis 10, p = 0 bis 3 mit

$a_{2)}$ 2 bis 12 Mol eines Vinylesters der allgemeinen Formel $CH_2=CHOCOR^1$, $R^1$ = Alkylrest mit 1 bis 4 Kohlenstoffatomen,

$a_{3)}$ 0 bis 6 Mol N-Vinylpyrrolidon,

$a_{4)}$ 0 bis 6 Mol eines Acryl- oder Methacrylsäureesters der allgemeinen Formel $CH_2=CR^2-COOR^3$, $R^2$ = H oder $CH_3$, $R^3$ = Alkylrest mit 1 bis 4 Kohlenstoffatomen,

wobei der Quotient aus dem durchschnittlichen Molekulargewicht des Monomeren $a_{1)}$ und der Molzahl der Monomeren $a_{2)}$, $a_{3)}$ und $a_{4)}$ 20 bis 500 ist.

Das Monomere $a_{1)}$ wird durch Anlagerung von Ethylenoxid und gegebenenfalls Propylenoxid und anschließende Umsetzung mit Epichlorhydrin in Gegenwart eines kationischen Katalysators, anschließende Chlorwasserstoffabspaltung unter Bildung des Oxiranringes in an sich bekannter Weise hergestellt.

Falls Ethylenoxid und Propylenoxid an Allylalkohol angelagert werden, kann die Anlagerung statistisch oder blockweise erfolgen.

Der Index m gibt die Zahl der hydrophilierenden Oxyethyleneinheiten an. Der Index m ist eine Zahl von 5 bis 75, vorzugsweise 20 bis 50. Der Index n bezeichnet den Gehalt an Oxypropyleneinheiten und ist eine Zahl von 0 bis 10, vorzugsweise 0 bis 6. Die Aufgabe der gegebenenfalls anwesenden Oxypropyleneinheiten besteht in der Verhinderung der Ausbildung kristalliner Bereiche im Monomeren und stellt sicher, daß das Makromonomere $a_{1)}$ in flüssiger Form vorliegt. Dies ist insbesondere dann von Bedeutung, wenn größere Anteile von Oxyethyleneinheiten im Monomeren enthalten sind. Bei einem relativ niedrigen Gehalt an Oxyethyleneinheiten bis zu etwa einem Gehalt von 18 Oxyethyleneinheiten kann auf Oxypropyleneinheiten verzichtet werden.

Der Index p hat einen Wert von 0 bis 3.

Das Monomere $a_{2)}$ ist ein Vinylester der allgemeinen Formel $CH_2=CHOCOR^1$, wobei $R^1$ ein Alkylrest mit 1 bis 4 Kohlenstoffatomen, vorzugsweise der Methylrest ist.

Das Monomere $a_{3)}$ ist N-Vinylpyrrolidon.

Das Monomere $a_{4)}$, welches im Copolymerisat gegebenenfalls enthalten ist, ist ein Acryl- oder Methacrylsäureester der allgemeinen Formel $CH_2=CR^2-COOR^3$. $R^2$ ist ein Wasserstoff- oder Methylrest, vorzugsweise ein Wasserstoffrest. $R^3$ ist ein Alkylrest mit 1 bis 4 Kohlenstoffatomen, vorzugsweise ein Methylrest.

Das Copolymerisat enthält, bezogen auf 1 Mol des Monomeren $a_{1)}$, 2 bis 12 Mol des Monomeren $a_{2)}$, vorzugsweise 3 bis 6 Mol des Monomeren $a_{2)}$, gegebenenfalls bis zu 6 Mol, vorzugsweise 1,5 bis 3 Mol, des Monomeren $a_{3)}$ und gegebenenfalls bis zu 6 Mol des Monomeren $a_{4)}$, vorzugsweise jedoch 1,5 bis 3 Mol des Monomeren $a_{4)}$. Dabei soll die zusätzliche Bedingung erfüllt sein, daß der Quotient aus dem durchschnittlichen Molekulargewicht des Monomeren $a_{1)}$ und der Molzahl der Summe der Monomeren $a_{2)}$, $a_{3)}$ und $a_{4)}$ 20 bis 500, vorzugsweise 40 bis 200 ist. Beträgt beispielsweise das durchschnittliche Molekulargewicht des Monomeren $a_{1)}$ 1000 und werden für die Copolymerisation 6 Mol des Monomeren $a_{2)}$, 3 Mol des Monomeren $a_{3)}$ und 3 Mol des Monomeren $a_{4)}$ verwendet, beträgt der Quotient

$$\frac{1000}{6 + 3 + 3} = 83{,}3$$

Das erfindungsgemäße Copolymerisat ist ein Pfropfcopolymerisat und hat eine kammartige Struktur, wobei jeweils am Ende der durch das Monomere $a_{1)}$ gebildeten Seitenketten Oxirangruppen vorliegen. Das Copolymerisat ist somit reaktiv und kann auf geeigneten Substraten, wie z.B. Textilfasern oder Faserprodukten, ausgehärtet werden. Dabei entstehen Produkte mit einer relativ hohen Vernetzungsdichte, welche eine hohe Permanenz der Ausrüstung bewirken.

Zur Vernetzung der erfindungsgemäßen Copolymerisate eignen sich die aus dem Stand der Technik bekannten und zur Umsetzung mit Oxirangruppen befähigten Härter.

Besonders geeignet sind dabei mehrwertige Amine, mehrwertige Amide, mehrwertige Thioalkohole oder anorganische oder organische Säuren. Beispiele solcher Verbindungen sind Polyamine, wie Ethylendiamin, Diethylentriamin, Triethylentetramin und deren Umsetzungsprodukten mit Diglycidylethern von Bisphenol A; Polyalkylenoxide mit endständigen Aminogruppen; Dicyandiamid; Mercaptogruppen enthaltende Verbindungen; Polyaminoimidazoline; Perfluoralkylcarbonsäuren; Perfluoralkylsulfonsäuren; anorganische Säuren.

Besonders bevorzugte Vernetzer sind Amine der allgemeinen Formel

$R^4\ [(C_3H_6O)_aNH_2]_b$ oder $R^4\ [(C_2H_4O)_aNH_2]_b$

In dieser Formel ist $R^4$ ein b-wertiger Alkoholrest, wobei b 2 oder 3 bedeutet. Beispiele solcher Alkoholreste sind Ethylenglykol, Propylenglykol, Butandiol, Glycerin oder Pentaerythrit, wobei jeweils das Wasserstoffatom der Hydroxylgruppe abgespalten ist. a ist eine Zahl von 4 bis 40. Der Verarbeitungszeitraum der erfindungsgemäßen Mittel kann wesentlich verlängert werden, wenn man statt der freien Amine deren Ammoniumverbindungen, vorzugsweise deren Acetate, verwendet.

Die Erfindung betrifft ferner die Herstellung der erfindungsgemäßen Copolymerisate. Das Verfahren verläuft in der Weise, daß man ein Comonomerengemisch, bestehend aus

$a_{1)}$ einem Mol eines Makromonomeren der allgemeinen Formel

$$CH_2=CH-CH_2O(C_2H_4O)_m-(C_3H_6O)_n-(CH_2\underset{CH_2Cl}{\underset{|}{C}}HO)_p-CH_2\underset{\diagdown\ O\ \diagup}{CH-CH_2}$$

m = 5 bis 75, n = 0 bis 10, p = 0 bis 3 mit

$a_{2)}$ 2 bis 12 Mol eines Vinylesters der allgemeinen Formel $CH_2=CHOCOR^1$, $R^1$ = Alkylrest mit 1 bis 4 Kohlenstoffatomen,

$a_{3)}$ 0 bis 6 Mol N-Vinylpyrrolidon,

$a_{4)}$ 0 bis 6 Mol eines Acryl- oder Methacrylsäureesters der allgemeinen Formel $CH_2=CR^2-COOR^3$, $R^2$ = H oder $CH_3$, $R^3$ = Alkylrest mit 1 bis 4 Kohlenstoffatomen,

wobei der Quotient aus dem durchschnittlichen Molekulargewicht des Monomeren $a_{1)}$ und der Molzahl der Monomeren $a_{2)}$, $a_{3)}$ und $a_{4)}$ 20 bis 500 betragen muß, in an sich bekannter Weise in Gegenwart von radikalbildenden Initiatoren, in einem organischen Lösungsmittel bei Temperaturen von 60 bis 100 °C copolymerisiert.

Als Initiatoren können radikalbildende Verbindungen, wie Peroxide, oder Azoverbindungen, wie Azodiisobuttersäuredinitril, verwendet werden.

Als Lösungsmittel können Alkohole, aromatische oder aliphatische Kohlenwasserstoffe, Ester oder Ketone verwendet werden. Bevorzugt sind Ethanol oder Propanol.

Ein weiterer Gegenstand der Erfindung besteht in der Verwendung der erfindungsgemäßen Copolymerisate für die Ausrüstung von Textilfasern oder Faserprodukten. Mit den erfindungsgemäßen Copolymerisaten gelingt es, die eingangs gestellten Anforderungen an die hydrophilierende Ausrüstung von Fasern oder Faserprodukten zu erfüllen. Dabei können die Copolymerisate zum Ausrüsten von Fasern oder Faserprodukten aus Cellulose (Baumwolle) und Kunstfasern, wie z.B. solche aus Polyestern, Polyamiden und Polyacrylnitril, verwendet werden. Die Verwendbarkeit der Copolymerisate ist jedoch nicht auf diese vorgenannten Fasern beschränkt.

Die erfindungsgemäßen Verbindungen werden in Form einer 0,1 bis 10 gew. – %igen wäßrigen Lösung in an sich bekannter Weise auf die Fasern aufgebracht. Hierzu werden die Fasern oder die Faserprodukte in die Lösung getaucht oder mit der Lösung getränkt, anschließend getrocknet und auf Temperaturen von 100 bis 180 ° C, vorzugsweise 120 bis 150 ° C 1 bis 10 Minuten erhitzt. Dabei härten die auf der Faser befindlichen Polymerisate aus.

In den folgenden Beispielen werden die Herstellung der erfindungsgemäßen Copolymerisate und deren anwendungstechnische Eigenschaften näher erläutert. Es werden außerdem die anwendungstechnischen Eigenschaften unterschiedlich zusammengesetzter erfindungsgemäßer Mittel gezeigt.

1. Herstellung erfindungsgemäßer Copolymerisate

1.1 Herstellung des Makromonomeren $a_{1)}$

116 g (ca. 2 Mol) Allylalkohol und 21 g (ca. 0,3 Mol) Kaliummethylat werden in einen Reaktor gegeben. Nach sorgfältiger Spülung mit Reinstickstoff wird auf 110 ° C geheizt und 1333 g (ca. 30,3 Mol) Ethylenoxid so schnell zugegeben, daß die Reaktorinnentemperatur 120 ° C und der Druck 6 bar nicht überschreiten. Nach vollständiger Einleitung des Ethylenoxids wird die Temperatur so lange auf 115 ° C gehalten, bis daß gleichbleibender Druck das Ende der Nachreaktion anzeigt. Danach werden bei 80 bis 90 ° unter Vakuum die nicht umgesetzten Monomeren entfernt.

Das erhaltene Produkt wird mit Hilfe von verdünnter Phosphorsäure neutralisiert und das Wasser durch Destillation, das entstandene Kaliumphosphat durch Filtration zusammen mit einem Filterhilfsmittel entfernt. Die Hydroxylzahl des Verfahrensproduktes beträgt 89,9, was bei einer angenommenen Funktionalität von eins einem Molekulargewicht von 625 entspricht. Aus der Jodzahl läßt sich ein Gehalt an Doppelbindungen von 96 % der Theorie errechnen.

625 g (ca. 1 Mol) des erhaltenen Polyethers werden mit 18 g einer 10,5 %igen Lösung von Bortrifluorid – Etherat in Diethylether versetzt und die erhaltene Mischung auf 60 ° C erwärmt. Dazu werden 185 g (ca. 2 Mol) Epichlorhydrin über einen Zeitraum von 1/2 h getropft und anschließend zur Nachreaktion für weitere 2 h bei 60 ° C erwärmt. Danach werden 54 g (ca. 1 Mol) Natriummethylat, gelöst in 110 g Methanol, bei etwa 25 ° C zugegeben und bei dieser Temperatur für 2 h zur Reaktion gebracht.

Nach Entfernung der flüchtigen Bestandteile der Reaktionsmischung durch Destillation wird das angefallene Natriumchlorid abfiltriert. Die Epoxidzahl des erhaltenen Produktes in Gew. – % Sauerstoff beträgt 2,61 (Polyether 1 – A).

In analoger Weise werden die Polyether 2 – A bis 7 – A hergestellt. Deren Zusammensetzung ergibt sich aus Tabelle 1.

Tabelle 1

| Polyether Nr. | Ethylenoxid Mol | Propylenoxid Mol | Molekulargewicht OHZ | Epoxidzahl Gew.-% Sauerstoff |
|---|---|---|---|---|
| 1-A | 15,2 | - | 625 | 2,61 |
| 2-A | 8,8 | - | 440 | 3,76 |
| 3-A | 28,9 | - | 1 310 | 1,20 |
| 4-A | 47,8 | - | 2 090 | 0,76 |
| 5-A | 12,9 | 1,8 | 720 | 1,87 |
| 6-A | 24,5 | 3,3 | 1 305 | 1,09 |
| 7-A | 72,3 | 8,6 | 3 320 | 0,46 |

1.2 Copolymerisation der Komponenten $a_{1)}$, $a_{2)}$, $a_{3)}$ und $a_{4)}$

600 g (ca. 1 Mol) des Polyethers 1 – A, gelöst in 1700 g Ethanol, werden in einem Dreihalskolben unter einem Stickstoffstrom auf 80 °C erhitzt. Dazu wird über einen Zeitraum von 3,0 h ein Gemisch von 516 g (ca. 6 Mol) Vinylacetat, 258 g (ca. 3 Mol) Methylacrylat und 333 g (ca. 3 Mol) N – Vinylpyrrolidon und parallel dazu 53,8 g Azodiisobuttersäuredinitril in 6 gleichen Gewichtsteilen über einen Zeitraum von 5 h zugegeben. Die Temperatur wird für weitere 8 h auf 80 °C gehalten. Anschließend werden die noch nicht umgesetzten Monomere im Vakuum abdestilliert. Aus der Menge an in einer Kühlfalle aufgefangenen Monomeren ergibt sich eine auf die Monomerenmischung bezogene Polymerisationsausbeute von 99 % der Theorie. Aus der Bestimmung der Jodzahl läßt sich errechnen, daß ca. 75 % des Polyethers 1 – A bei der Copolymerisation verbraucht worden sind. Aus der gelchromatographischen Untersuchung ergibt sich für das Copolymerisat I ein numerisches Molekulargewicht von ca. 4 000.

In analoger Weise werden die Copolymerisate II – VIII hergestellt. Deren Zusammensetzung ergibt sich aus Tabelle 2.

Tabelle 2

| Erf.gem. Copoly-merisat Nr. | Polyether Nr. | Vinylacetat Mol | N-Vinylpyr-rolidon Mol | Methylacrylat Mol | Quotient |
|---|---|---|---|---|---|
| I | 1-A | 6 | 3 | 3 | 50,0 |
| II | 2-A | 6 | 3 | 3 | 34,5 |
| III | 3-A | 6 | 3 | 3 | 107,0 |
| IV | 4-A | 6 | 3 | 3 | 172,0 |
| V | 4-A | 3 | 1,5 | 1,5 | 344,0 |
| VI | 5-A | 6 | 3 | 3 | 57,9 |
| VII | 6-A | 6 | 3 | 3 | 107,7 |
| VIII | 7-A | 4 | 3 | - | 474,3 |

2. Vernetzer

Als die Vernetzung bewirkende Verbindungen werden verwendet (Tabelle 3):

Tabelle 3

| | |
|---|---|
| 1-C | Triethylentetramin |
| 2-C | Umsetzungsprodukt aus 2 Mol Ethylendiamin und dem Diglycidylether des Bisphenol A |
| 3-C | α,ω-Diaminopolypropylenoxid (MG ≈ 400) |
| 4-C | α,ω-Triaminopolypropylenoxid (MG ≈ 400) |
| 5-C | α,ω-Diaminopolypropylenoxid (MG ≈ 400) im Molverhältnis 1 : 2 mit Essigsäure umgesetzt |
| 6-C | Dicyandiamid + 1 % Triethylendiamin |
| 7-C | polyfunktionelle Sulfhydrylverbindung, im Handel von der Firma Schering unter der Bezeichnung XE 90 erhältlich |
| 8-C | Polyaminoimidazolin, im Handel von der Firma Schering unter der Bezeichnung Versamid 140 erhältlich |
| 9-C | Trifluoressigsäure |
| 10-C | Trifluormethansulfonsäure |
| 11-C | Phosphorsäure |

3. Prüfung der anwendungstechnischen Eigenschaften der erfindungsgemäßen Copolymerisate

Die Copolymerisate werden mit Härter versetzt und in Wasser gelöst. Die Zusammensetzung der Copolymerisat/Härtergemische ergibt sich aus Tabelle 4.

Tabelle 4

| Mittel | Erfindungsgemäßes Copolymerisat * | | Vernetzer ** | |
|---|---|---|---|---|
| | Nr. | Gew.-% | Nr. | Gew.-% |
| 1 | I | 88,2 | 2 | 11,8 |
| 2 | I | 89,5 | 7 | 10,5 |
| 3 | I | 94,7 | 8 | 5,3 |
| 4 | I | 97,6 | 6 | 2,4 |
| 5 | II | 86,7 | 2 | 13,3 |
| 6 | III | 98,6 | 1 | 1,4 |
| 7 | IV | 96,1 | 4 | 3,9 |
| 8 | V | 95,3 | 4 | 4,7 |
| 9 | VI | 86,6 | 4 | 13,4 |
| 10 | VII | 91,7 | 4 | 8,3 |
| 11 | VIII | 96,3 | 4 | 3,7 |

* siehe Tabelle 2

** siehe Tabelle 3

3.1 Ermittlung der Hydrophilie

3.1.1 Tropfentest

Aus den in Tabelle 4 beschriebenen Gemischen werden 5 %ige Lösungen in Wasser hergestellt. In dieser Flotte werden Streifen eines Polyestergewebes mit einer Fläche von 450 mm x 230 mm und einem Flächengewicht von 48 g/m$^2$ getränkt und so foulardiert, daß das Naßgewicht etwa dem 2fachen des Trockengewichtes des Gewebes entspricht. Danach werden die Proben in einem Umlufttrockenschrank für 10 min bei 140 °C getrocknet und das Hydrophilierungsmittel dabei zur Reaktion gebracht. Schließlich wird das Auflagegewicht, das in der Regel bei etwa 5 Gew.-% liegt, ermittelt.

Nach Aufbringung des Hydrophilierungsmittels wird die Stoffprobe auf zwei Seiten mit Hilfe von zwei Nadelreihen faltenfrei auf einen Edelstahlrahmen gespannt. Aus einer Bürette werden darauf 0,05 ml Wasser als Tropfen auf das Gewebe gebracht und mit der Stoppuhr die Zeit bis zur vollständigen Netzung der Tropfen gemessen.

3.1.2 Bestimmung der Saugfähigkeit (Steighöhe)

Die gemäß 3.1.1 erhaltenen Stoffproben werden entsprechend der DIN 53 924 untersucht. Die Saugfähigkeit eines Textilmaterials beruht auf seiner Fähigkeit, Flüssigkeit aufgrund der Kapillarkräfte entgegen der Schwerkraft zu transportieren. Dabei dient die Steighöhe der Flüssigkeit als Maß für die Saugfähigkeit der Stoffe.

Für die Prüfung werden Stoffstreifen in einem Gefäß mit einem Ende in Wasser gebracht. Mit einem Meßstab wird dann die Steighöhe der Flüssigkeit nach einer Minute festgestellt.

3.2 Ermittlung der Permanenz der Hydrophilausrüstung

3.2.1 Durch Soxhlet-Extraktion

Die gemäß 3.1.1 erhaltenen Stoffproben werden in einer Soxhlet-Apparatur 18 h mit destilliertem Wasser extrahiert. Die Permanenz P wird durch Bestimmung des Gewichtes der Stoffprobe vor A und nach der Extraktion B nach folgender Beziehung ermittelt

P = B/A . 100 [Gew.-%]

3.2.2 Durch Waschverfahren

Gemäß 3.1.1 erhaltene Stoffproben werden fünfmal im Normalprogramm einer Trommelwaschmaschine für Heißwäsche bei 60 °C gewaschen. Die Ermittlung der Permanenz erfolgt wie in 3.2.1.

3.3 Ermittlung der Soil-Release-Eigenschaften

Mit der Soil-Release-Prüfung werden Aussagen über die Auswaschbarkeit von Verschmutzungen aus dem Haushaltsbereich unter Haushaltsbedingungen gemacht. Dazu werden stellvertretend für viele Schmutztypen stets gleiche Mengen

- Motoraltöl
- schwarzer Traubensaft
- Kaffee

auf die Stoffproben aufgebracht. Nach einer Einwirkungszeit von 60 Minuten werden die Stoffproben in einer Trommelwaschmaschine im Normalprogramm für Heißwäsche bei 60 °C gewaschen. Zur Beurteilung des Reinigungseffektes werden die getrockneten Stoffproben unter Overhead-Lightning-Beleuchtungsbedingungen mit den photographischen Standards der AAT CC 130-1970 verglichen und mit den Noten 1 bis 5 versehen, wobei die Note 1 völlige Fleckenentfernung und 5 völlige Retention bedeuten.

3.4 Beurteilung des Griffes

Das behandelte Textilgewebe muß angenehmen Griff und Glätte besitzen. Für die Beurteilung des Warengriffs gibt es jedoch keine objektiven Maßstäbe. Als Beurteilungskriterium kann jedoch die Weichheit im Gegensatz für Steifheit und die Oberflächenglätte eines Gewebes herangezogen werden. Die Einteilung des Griffes in die Kategorien: sehr weich, weich und hart ist nicht frei von subjektiven Einflüssen.

Tabelle 6 Anwendungstechnische Prüfung

| Mittel | Hydrophilie[1)] Tropfentest [sec] | Hydrophilie[1)] Steighöhe [mm] | Permanenz nach Extraktion [Gew.-%] | Permanenz nach 5 Wäschen [Gew.-%] | Soil Release[2)] Kaffee | Soil Release[2)] schwarzer Traubensaft | Soil Release[2)] Altöl | Griff[3)] |
|---|---|---|---|---|---|---|---|---|
| 1 | 18 | 2 | 62 | 48 | 1 | 3 | 3 | 3 |
| 2 | 4 | 18 | 48 | 36 | 1 | 4 | 2 | 3 |
| 3 | 5 | 16 | 50 | 43 | 1 | 3 | 2 | 3 |
| 4 | 7 | 12 | 40 | 33 | 1 | 3 | 2 | 3 |
| 5 | 22 | 1 | 68 | 58 | 1 | 3 | 3 | 3 |
| 6 | 4 | 20 | 40 | 35 | 1 | 3 | 2 | 2 |
| 7 | 2 | 26 | 35 | 29 | 1 | 2 | 2 | 3 |
| 8 | 2 | 27 | 75 | 68 | 1 | 2 | 2 | 3 |
| 9 | 3 | 22 | 76 | 70 | 1 | 2 | 2 | 3 |
| 10 | 4 | 25 | 65 | 62 | 1 | 2 | 2 | 2 |
| 11 | 2 | 26 | 60 | 55 | 1 | 2 | 2 | 2 |
| unbehandeltes Gewebe | > 120 | 0 | - | - | 2 | 3 | 6 | 2 |

1) nach der ersten Minute

2) Bewertung:
1 = sehr gut, vollständige Entfernung
2 = gut, geringe Reste
3 = befriedigend, schwacher Fleck
4 = ausreichend, deutlicher Fleck
5 = kaum Reinigungseffekt
6 = unverändert

3)
1 = sehr weich
2 = weich
3 = mittel
4 = hart

## Patentansprüche

**1.** Epoxidgruppen aufweisende Copolymerisate, erhältlich durch Copolymerisation von

$a_{1)}$ einem Mol eines Makromonomeren der allgemeinen Formel

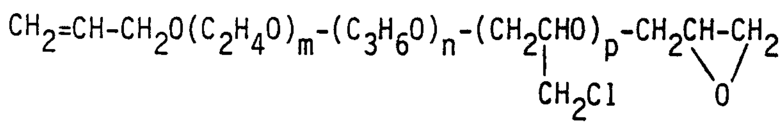

m = 5 bis 75, n = 0 bis 10, p = 0 bis 3 mit

$a_{2)}$ 2 bis 12 Mol eines Vinylesters der allgemeinen Formel $CH_2=CHOCOR^1$, $R^1$ = Alkylrest mit 1 bis 4 Kohlenstoffatomen,

$a_{3)}$ 0 bis 6 Mol N-Vinylpyrrolidon,

$a_{4)}$ 0 bis 6 Mol eines Acryl- oder Methacrylsäureesters der allgemeinen Formel $CH_2=CR^2-COOR^3$, $R^2$ = H oder $CH_3$, $R^3$ = Alkylrest mit 1 bis 4 Kohlenstoffatomen,

wobei der Quotient aus dem durchschnittlichen Molekulargewicht des Monomeren $a_{1)}$ und der Molzahl der Monomeren $a_{2)}$, $a_{3)}$ und $a_{4)}$ 20 bis 500 ist.

**2.** Verfahren zur Herstellung der Copolymerisate von Anspruch 1, dadurch gekennzeichnet, daß man ein Comonomerengemisch, bestehend aus

$a_{1)}$ einem Mol eines Makromonomeren der allgemeinen Formel

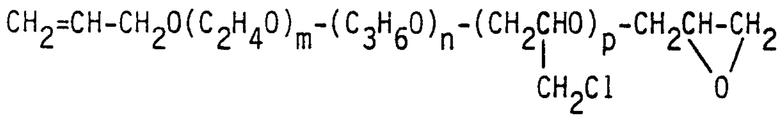

m = 5 bis 75, n = 0 bis 10, p = 0 bis 3 mit

$a_{2)}$ 2 bis 12 Mol eines Vinylesters der allgemeinen Formel $CH_2=CHOCOR^1$, $R^1$ = Alkylrest mit 1 bis 4 Kohlenstoffatomen,

$a_{3)}$ 0 bis 6 Mol N-Vinylpyrrolidon,

$a_{4)}$ 0 bis 6 Mol eines Acryl- oder Methacrylsäureesters der allgemeinen Formel $CH_2=CR^2-COOR^3$, $R^2$ = H oder $CH_3$, $R^3$ = Alkylrest mit 1 bis 4 Kohlenstoffatomen,

wobei der Quotient aus dem durchschnittlichen Molekulargewicht des Monomeren $a_{1)}$ und der Molzahl

der Monomeren $a_{2)}$, $a_{3)}$ und $a_{4)}$ 20 bis 500 betragen muß, in an sich bekannter Weise in Gegenwart von radikalbildenden Initiatoren, in einem organischen Lösungsmittel bei Temperaturen von 60 bis 100 °C copolymerisiert.

**3.** Verwendung der Copolymerisate von Anspruch 1 zur Ausrüstung von Textilfasern oder Faserprodukten.

**Claims**

**1.** Epoxy-containing copolymers, obtainable by copolymerisation of
$a_1$) one mole of a macromonomer of the general formula

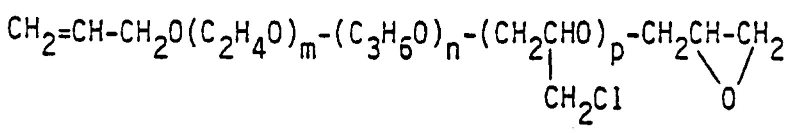

m = 5 to 75, n = 0 to 10, p = 0 to 3, with
$a_2$) 2 to 12 mol of vinyl ester of the general formula $CH_2 = CHOCOR^1$, $R^1$ = an alkyl radical having 1 to 4 carbon atoms,
$a_3$) 0 to 6 mol of N-vinylpyrrolidone,
$a_4$) 0 to 6 mol of an acrylic or methacrylic ester of the general formula $CH_2 = CR^2 - COOR^3$, $R^2$ = H or $CH_3$, $R^3$ = an alkyl radical having 1 to 4 carbon atoms,
wherein the ratio of the average molecular weight of monomer $a_1$) to the number of moles of monomers $a_2$), $a_3$) and $a_4$) is 20:1 to 500:1.

**2.** Process for preparing the copolymers of Claim 1, characterised in that a comonomer mixture comprising
$a_1$) one mole of a macromonomer of the general formula

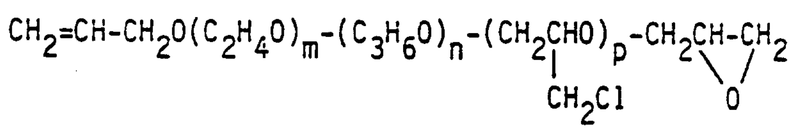

m = 5 to 75, n = 0 to 10, p = 0 to 3, with
$a_2$) 2 to 12 mol of vinyl ester of the general formula $CH_2 = CHOCOR^1$, $R^1$ = an alkyl radical having 1 to 4 carbon atoms,
$a_3$) 0 to 6 mol of N-vinylpyrrolidone,
$a_4$) 0 to 6 mol of an acrylic or methacrylic ester of the general formula $CH_2 = CR^2 - COOR^3$, $R^2$ = H or $CH_3$, $R^3$ = an alkyl radical having 1 to 4 carbon atoms,
wherein the ratio of the average molecular weight of monomer $a_1$) to the number of moles of monomers $a_2$), $a_3$) and $a_4$) shall be 20:1 to 500:1, is copolymerised in a conventional manner in an organic solvent at temperatures from 60 to 100 °C in the presence of free radical initiators.

**3.** Use of the copolymers of Claim 1 for finishing textile fibres or fibrous products.

**Revendications**

**1.** Copolymères comportant des groupes époxydes, qu'on obtient grâce à la copolymérisation de :
$a_{1)}$ une mole d'un macromonomère répondant à la formule générale

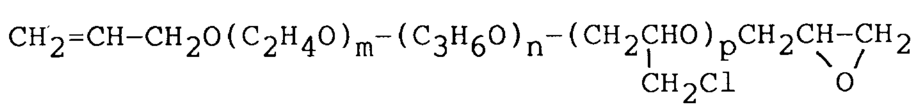

m = 5 à 75, n = 0 à 10, p = 0 à 3, avec

$a_{2)}$ 2 à 12 moles d'un ester vinylique répondant à la formule générale $CH_2=CHOCOR^1$, $R^1$ = reste alcoyle comportant 1 à 4 atomes de carbone,

$a_{3)}$ 0 à 6 moles de N-vinylpyrrolidone,

$a_{4)}$ 0 à 6 moles d'un ester de l'acide acrylique ou méthacrylique, répondant à la formule générale $CH_2=CR^2-COOR^3$ où $R^2$ = H ou $CH_3$, $R^3$ = un reste alcoyle comportant 1 à 4 atomes de carbone,

le quotient du poids moléculaire moyen du monomère $a_{1)}$ et du nombre molaire des monomères $a_{2)}$, $a_{3)}$ et $a_{4)}$ valant de 20 à 500.

**2.** Procédé de préparation des copolymères selon la revendication 1, caractérisé en ce qu'on copolymérise un mélange de comonomères formé de :

$a_{1)}$ une mole d'un macromonomère répondant à la formule générale

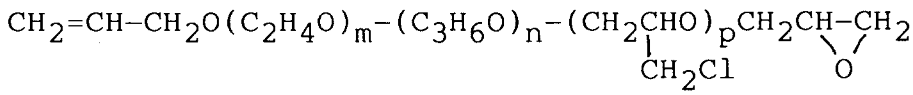

m = 5 à 75, n = 0 à 10, p = 0 à 3, avec

$a_{2)}$ 2 à 12 moles d'un ester vinylique répondant à la formule générale $CH_2=CHOCOR^1$, $R^1$ = un reste alcoyle comportant 1 à 4 atomes de carbone,

$a_{3)}$ 0 à 6 moles de N-vinylpyrrolidone,

$a_{4)}$ 0 à 6 modes d'un ester de l'acide acrylique ou méthacrylique, répondant à la formule générale $CH_2=CR^2-COOR^3$ où $R^2$ = H ou $CH_3$, $R^3$ = un reste alcoyle comportant 1 à 4 atomes de carbone,

le quotient du poids moléculaire moyen du monomère $a_{1)}$ et du nombre molaire des monomères $a_{2)}$, $a_{3)}$ et $a_{4)}$ devant valoir de 20 à 500, d'une manière connue en soi, en présence d'initiateurs de formation de radicaux, dans un solvant organique à une température comprise entre 60 et 100 °C.

**3.** Utilisation des copolymères selon la revendication 1 pour l'apprêtage de fibres textiles ou de produits fibreux.